# EUROPEAN PATENT APPLICATION

(11) **EP 3 257 750 A1**
(43) Date of publication of application: **20.12.2017**
(21) Application number: 17172155.8
(22) Date of filing: 22.05.2017
(51) Int. Cl.: B64C 25/36, B64C 25/40

(54) **AUXILIARY ROTATING STRUCTURE AND TIRE ASSEMBLY THEREWITH**

(30) Priority: 15.06.2016 US 201615182623
(71) Applicant: Pao, Wei-Lin, Taipei City 104 (TW)
(72) Inventor: Pao, Wei-Lin, Taipei City 104 (TW)
(74) Representative: Becker Kurig Straus

(57) **Abstract**

An auxiliary rotating structure (11) adapted for a tire (10) of an aircraft (2) includes a first side wall (111) and a second side wall (112). The first side wall (111) is fixed on a wall (101) of the tire (10) and rotates along with the tire (10). A side (1120) of the second side wall (112) is connected to a side (1110) of the first side wall (111) to form a chamber (113) between the first side wall (111) and the second side wall (112). An opening (114) is formed between the other side (1111) of the first side wall (111) and the other side (1121) of the second side wall (112) and communicated with the chamber (113). The second side wall (112) is made of resilient material. When the auxiliary rotating structure (11) is located at a lower side of the tire (10), an air flow (W) passes through the opening (114) into the chamber (113) to generate a first torque along a first rotary direction (R1) for rotating the tire (10).

## Description

### Field of the Invention

The present invention relates to an auxiliary rotating structure and a tire assembly according to the pre-characterizing clauses of claims 1 and 4.

### Background of the Invention

A tire of an aircraft is for absorbing an impact force and providing a frictional force when the aircraft is landing. Especially, when the tire contacts the ground surface during the landing of the aircraft, the frictional force drives the tire to start rotating, so that the tire is worn by the frictional force seriously at this moment, which reduces service life of the tire. Therefore, the tire should be inspected and replaced by a new one within a short period, which increases cost of replacement and maintenance.

### Summary of the Invention

This is mind, the present invention aims at providing an auxiliary rotating structure and a tire assembly therewith capable of preventing a serious wear caused by a high speed touchdown of an aircraft, so as to extend service life of the tire assembly.

This is achieved by an auxiliary rotating structure and a tire assembly according to claims 1 and 4. The dependent claims pertain to corresponding further developments and improvements.

As will be seen more clearly from the detail description following below, the claimed auxiliary rotating structure is adapted for a tire of an aircraft and includes a first side wall and a second side wall. The first side wall is fixed on a wall of the tire and rotates along with the tire. A side of the second side wall is connected to a side of the first side wall to form a chamber between the first side wall and the second side wall. An opening is formed between the other side of the first side wall and the other side of the second side wall and communicated with the chamber. The second side wall is made of resilient material. When the auxiliary rotating structure is located at a lower side of the tire, the opening faces windward with respect to an air flow, so that the air flow passes through the opening into the chamber to generate a first torque along a first rotary direction for rotating the tire, and when the auxiliary rotating structure is located at an upper side of the tire, the opening faces leeward with respect to the air flow, so that the air flow flows through the second side wall to deform the second side wall to be attached on the first side wall for generating a second torque along a second rotary direction opposite to the first rotary direction and less than the first torque.

According to the disclosure, the side of the first side wall and the side of the second side wall are formed in a streamlined shape.

According to the disclosure, the other side of the second side wall is formed in a curved shape.

Besides, the claimed tire assembly includes tire having a wall and at least one auxiliary rotating structure. The at least one auxiliary rotating structure includes a first side wall and a second side wall. The first side wall is fixed on the wall and rotates along with the tire. A side of the second side wall is connected to a side of the first side wall to form a chamber between the first side wall and the second side wall. An opening is formed between the other side of the first side wall and the other side of the second side wall and communicated with the chamber. The second side wall is made of resilient material. When the at least one auxiliary rotating structure is located at a lower side of the tire, the opening faces windward with respect to an air flow, so that the air flow passes through the opening into the chamber to generate a first torque along a first rotary direction for rotating the tire, when the auxiliary rotating structure is located at an upper side of the tire, the opening faces leeward with respect to the air flow, so that the air flow flows through the second side wall to deform the second side wall to be attached on the first side wall for generating a second torque along a second rotary direction opposite to the first rotary direction and less than the first torque.

According to the disclosure, the side of the first side wall and the side of the second side wall are formed in a streamlined shape.

According to the disclosure, the other side of the second side wall is formed in a curved shape.

According to the disclosure, the wall and the at least one auxiliary rotating structure are integrally formed.

According to the disclosure, the at least one auxiliary rotating structure comprises four auxiliary rotating structures disposed on the wall at equal intervals.

In summary, the present invention utilizes the first side wall and the second side wall on the wall of the tire for forming the chamber and the opening of the auxiliary rotating structure. Therefore, when the auxiliary rotating structure is located at the lower side of the tire, the opening faces windward with respect to the air flow, so that the air flow passes through the opening into the chamber to generate the first torque along the first rotary direction for rotating the tire assembly, which reduces the relative speed between the tire and the ground surface and relieves wear of the tire, so as to extend the service life of the tire. Furthermore, when the auxiliary rotating structure is located at the upper side of the tire assembly, the opening faces leeward with respect to the air flow, so that the air flow flows through the second side wall to deform the second side wall to be attached on the first side wall for generating the second torque along the second rotary direction opposite to the first rotary direction and less than the first torque, which facilitates the tire assembly to rotate in the first rotary direction without air resistance.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a schematic diagram of an aircraft with a tire assembly according to an embodiment of the present invention,
FIG. 2 is a diagram of the tire assembly according to the embodiment of the present invention,
FIG. 3 is a diagram of an auxiliary rotating structure according to the embodiment of the present invention, and
FIG. 4 is a diagram of the tire assembly as the aircraft is landing according to the embodiment of the present invention.

### Detailed Description

In order to illustrate technical specifications and structural features as well as achieved purposes and effects of the present invention, relevant embodiments and figures are described as follows.

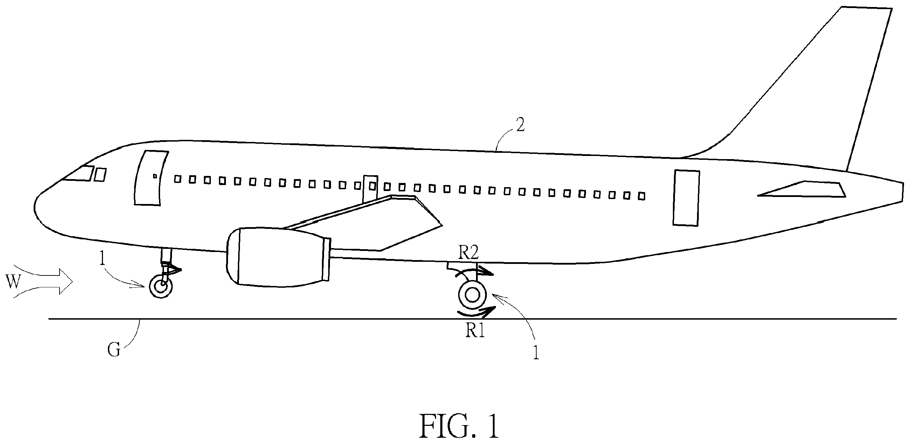

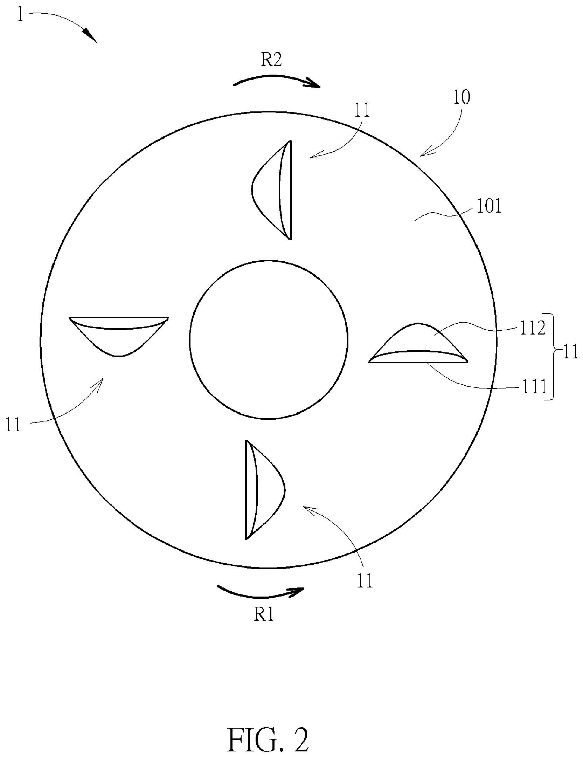

Please refer to FIG. 1 and FIG. 2. FIG. 1 is a schematic diagram of an aircraft 2 with a tire assembly 1 according to an embodiment of the present invention. FIG. 2 is a diagram of the tire assembly 1 according to the embodiment of the present invention. As shown in FIG. 1, the tire assembly 1 is installed on the aircraft 2 and capable of being driven to rotate for reducing a frictional force between the tire assembly 1 and a ground surface G as the aircraft 2 is landing. As shown in FIG. 2, the tire assembly 1 includes a tire 10 having a wall 101, and four auxiliary rotating structures 11. The wall 101 can be a surface on a tire body or a hub of the tire 10. The four auxiliary rotating structures 11 are symmetrically disposed on the wall 101 of the tire 10 at equal intervals. In other words, an included angle between two adjacent auxiliary rotating structures 11 is 90 degrees substantially. However, the number and configuration of the auxiliary rotating structure 11 are not limited to this embodiment. For example, the tire assembly 1 can includes two auxiliary rotating structures 11 diagonally disposed on the wall 101 and opposite to each other.

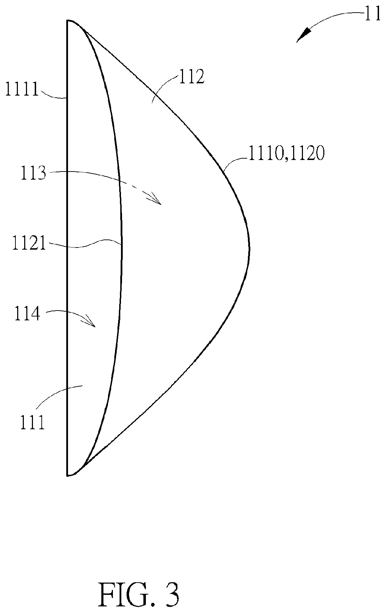

Please refer to FIG. 2 and FIG. 3. FIG. 3 is a diagram of the auxiliary rotating structure 11 according to the embodiment of the present invention. As shown in FIG. 2 and FIG. 3, the rotating structure includes a first side wall 111 and a second side wall 112. The first side wall 111 is fixed on the wall 101 of the tire 10 and rotates along with the tire 10. A side 1120 of the second side wall 112 is connected to a side 1110 of the first side wall 111 to form a chamber 113 between the first side wall 111 and the second side wall 112. An opening 114 is formed between the other side 1111 of the first side wall 111 and the other side 1121 of the second side wall 112 and communicated with the chamber 113. In other words, the second side wall 112 is connected to the first side wall 111 by the following ways. The opening 114 is located at a side of the auxiliary rotating structure 11 and communicated with the chamber 113 between the first side wall 111 and the second side wall 112. Besides, at the other side of the auxiliary rotating structure 11, an edge of the side 1120 of the second side wall 112 is connected to the first wall 111 all the way (without any opening). Furthermore, in this embodiment, the second side wall 112 can be made of resilient material, so as to be deformed easily. The side 1110 of the first side wall 111 and the side 1120 of the second side wall 112 can be formed in a streamlined shape, and the other side 1121 of the second side wall 112 can be formed in a curved shape. However, the shapes of the first side wall 111 and the side of the second side wall 112 are not limited to this embodiment.

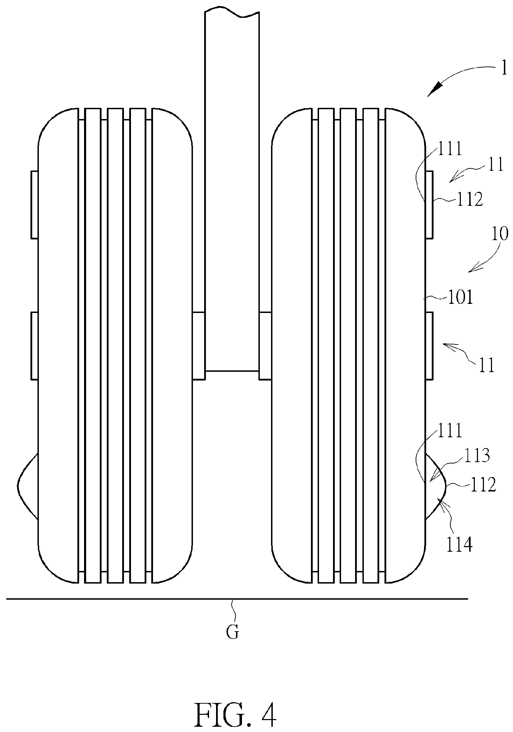

Please refer to FIG. 1 to FIG. 4. FIG. 4 is a diagram of the tire assembly 1 as the aircraft 2 is landing according to the embodiment of the present invention. As shown in FIG. 1 to FIG. 4, when the aircraft 2 is landing, the tire assembly 1 is located at a landing position. The opening 114 of one of the four auxiliary rotating structures 11 located at a lower side of the wall 101 of the tire 10 faces windward with respect to an air flow W. The curved-shaped side 1121 of the second side wall 112 allows the air flow W to pass through the opening 114 into the chamber 113 of the auxiliary rotating structures 11 located at the lower side of the wall 101 easily, so as to generate a first torque along a first rotary direction R1 for rotating the tire assembly 1. At this time, the opening 114 of another one of the four auxiliary rotating structures 11 located at an upper side of the wall 101 faces leeward with respect to the air flow W. The streamlined-shaped sides 1110, 1120 of the first side wall 111 and the second side wall 112 of the auxiliary rotating structures 11 located at the upper side of the wall 101 allow the air flow W to smoothly flow through the second side wall 112, so as to deform the second side wall 112 to be attached on the first side wall 111 for generating a second torque along a second rotary direction R2 opposite to the first rotary direction R1 and less than the first torque. Therefore, the tire assembly 1 can be driven to rotate along the first rotary direction R1 (forward), due to a resultant torque of the first torque and the second torque. As for the other two auxiliary rotating structures 11 located at left and right sides of the wall 101 of the tire 10, since the side 1110 of the first side wall 111 and the side 1120 of the second side wall 112 are formed in a streamlined shape, the air flow W can flow through the second side walls 112 of the auxiliary rotating structures 11 smoothly. Therefore, the second side walls 112 of the other two auxiliary rotating structures 11 located at the left and right sides of the wall 101 of the tire 10 are driven to be deformed and attached on the first side walls 111.

In other words, the auxiliary rotating structure 11 located at the lower side of the wall 101 receives the air flow W to generate the first torque for driving the tire assembly 1 to rotate in the first rotary direction R1. Except for the auxiliary rotating structure 11 located at the lower side of the wall 101, other three auxiliary rotating structures 11 are collapsed by the air flow W, so as to generate the second torque along the second direction R2 and less than the first torque. The tire assembly 1 is driven to rotate forwardly before landing, so that a relative speed between the tire 10 and the ground surface G can be reduced for reducing the frictional force between the tire 10 and the ground surface G, which extends the service life of the tire 10 of the tire assembly 1.

In contrast to the prior art, the present invention utilizes the first side wall and the second side wall on the wall of the tire for forming the chamber and the opening of the auxiliary rotating structure. Therefore, when the auxiliary rotating structure is located at the lower side of the tire, the opening faces windward with respect to the air flow, so that the air flow passes through the opening into the chamber to generate the first torque along the first rotary direction for rotating the tire assembly, which reduces the relative speed between the tire and the ground surface and relieves wear of the tire, so as to extend the service life of the tire. Furthermore, when the auxiliary rotating structure is located at the upper side of the tire assembly, the opening faces leeward with respect to the air flow, so that the air flow flows through the second side wall to deform the second side wall to be attached on the first side wall for generating the second torque along the second rotary direction opposite to the first rotary direction and less than the first torque, which facilitates the tire assembly to rotate in the first rotary direction without air resistance.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. An auxiliary rotating structure (11) adapted for a tire (10) of an aircraft (2), the auxiliary rotating structure (11) **characterized by**:
a first side wall (111) fixed on a wall (101) of the tire (10) and rotating along with the tire (10); and
a second side wall (112), a side (1120) of the second side wall (112) being connected to a side (1110) of the first side wall (111) to form a chamber (113) between the first side wall (111) and the second side wall (112), an opening (114) being formed between the other side (1111) of the first side wall (111) and the other side (1121) of the second side wall (112) and communicated with the chamber (113), the second side wall (112) being made of resilient material;
wherein when the auxiliary rotating structure (11) is located at a lower side of the tire (10), the opening (114) faces windward with respect to an air flow (W), so that the air flow (W) passes through the opening (114) into the chamber (113) to generate a first torque along a first rotary direction (R1) for rotating the tire (10), and when the auxiliary rotating structure (11) is located at an upper side of the tire (10), the opening (114) faces leeward with respect to the air flow (W), so that the air flow (W) flows through the second side wall (112) to deform the second side wall (112) to be attached on the first side wall (111) for generating a second torque along a second rotary direction (R2) opposite to the first rotary direction (R1) and less than the first torque.

2. The auxiliary rotating structure (11) of claim 1, **characterized in that** the side (1110) of the first side wall (111) and the side (1120) of the second side wall (112) are formed in a streamlined shape.

3. The auxiliary rotating structure (11) of claim 1 or 2, **characterized in that** the other side (1121) of the second side wall (112) is formed in a curved shape.

4. A tire assembly (1) comprising:
a tire (10) comprising a wall (101); and
**characterized by**:
at least one auxiliary rotating structure (11) comprising:
a first side wall (111) fixed on the wall (101) and rotating along with the tire (10); and
a second side wall (112), a side (1120) of the second side wall (112) being connected to a side (1110) of the first side wall (111) to form a chamber (113) between the first side wall (111) and the second side wall (112), an opening (114) being formed between the other side (1111) of the first side wall (111) and the other side (1121) of the second side wall (112) and communicated with the chamber (113), the second side wall (112) being made of resilient material;
wherein when the at least one auxiliary rotating structure (11) is located at a lower side of the tire (10), the opening (114) faces windward with respect to an air flow (W), so that the air flow (W) passes through the opening (114) into the chamber (113) to generate a first torque along a first rotary direction (R1) for rotating the tire (10), when the auxiliary rotating structure (11) is located at an upper side of the tire (10), the opening (114) faces leeward with respect to the air flow (W), so that the air flow (W) flows through the second side wall (112) to deform the second side wall (112) to be attached on the first side wall (111) for generating a second torque along a second rotary direction (R2) opposite to the first rotary direction (R1) and less than the first torque.

5. The tire assembly (1) of claim 4, **characterized in that** the side (1110) of the first side wall (111) and the side (1120) of the second side wall (112) are formed in a streamlined shape.

6. The tire assembly (1) of claim 4 or 5, **characterized in that** the other side (1121) of the second side wall (112) is formed in a curved shape.

7. The tire assembly (1) of any one of claims 4 to 6, **characterized in that** the wall (101) and the at least one auxiliary rotating structure (11) are integrally formed.

8. The tire assembly (1) of any one of claims 4 to 7, **characterized in that** the at least one auxiliary rotating structure (11) comprises four auxiliary rotating structures (11) disposed on the wall (101) at equal intervals.
